(19) Europäisches Patentamt
European Patent Office
Office européen des brevets

(11) EP 3 336 130 A1

(12) **EUROPÄISCHE PATENTANMELDUNG**

(43) Veröffentlichungstag:
**20.06.2018 Patentblatt 2018/25**

(21) Anmeldenummer: **16205145.2**

(22) Anmeldetag: **19.12.2016**

(51) Int Cl.:
***C08G 65/26*** *(2006.01)* ***C08G 18/00*** *(2006.01)*
***C08G 64/34*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYETHERTHIOCARBONATPOLYOLEN**

(57) Ein Verfahren zur Herstellung von Polyetherthiocarbonatpolyolen, umfassend den Schritt der Reaktion von Kohlenstoffdisulfid und mindestens eines Alkylenoxids in Gegenwart eines Doppelmetallcyanid-Katalysators und mindestens einer H-funktionellen Starterverbindung, wobei der Doppelmetallcyanid-Katalysator vor dem ersten Kontakt mit Kohlenstoffdisulfid zuvor mit mindestens einem Alkylenoxid kontaktiert wurde Der Die Erfindung betrifft ebenfalls ein nach dem erfindungsgemäßen Verfahren erhältliches Polyol

EP 3 336 130 A1

**Beschreibung**

Die vorliegende Erfindung betrifft ein Verfahren zur Herstellung von Polyetherthiocarbonatpolyolen, umfassend den Schritt der Reaktion von Kohlenstoffdisulfid und mindestens eines Alkylenoxids in Gegenwart eines Doppelmetallcyanid-Katalysators und mindestens einer Starterverbindungen mit 2 oder mehr Zerewitinoff-aktiven H-Atomen. Sie betrifft ebenfalls ein nach dem erfindungsgemäßen Verfahren erhältliches Polyol sowie ein hiermit hergestelltes Polyurethanpolymer.

Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, X für O steht und e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für X = O, R = $CH_3$ Propylencarbonat).

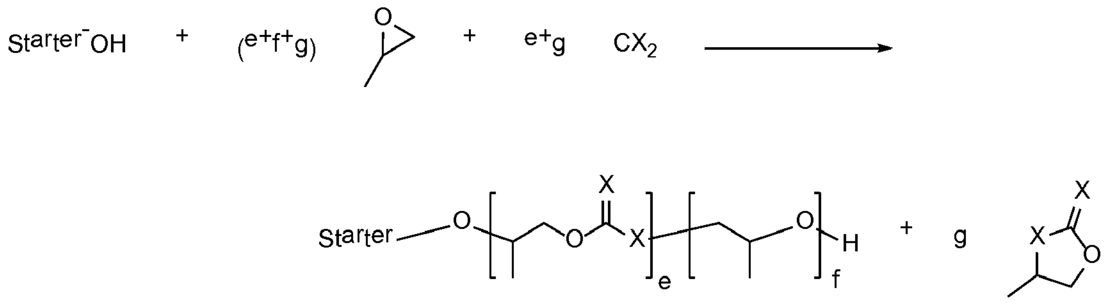

(I)

Für bestimmte Anwendungen wäre es vorteilhaft, einen Teil oder alle der im Polyethercarbonatpolyol enthaltenen Carbonatgruppen durch Thiocarbonatgruppen zu ersetzen (Schema (I), X = S).

WO 2003/029325 A1 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. Die Verwendung von $CS_2$ als Co-Reagenz und die Herstellung von Polyetherthiocarbonatpolyolen werden nicht genannt.

D. J. Darensbourg, S. J. Wilson, A. D. Yeung, Macromolecules 2013, 46, 8102-8110 beschreibt die Copolymerisation von Cyclopentenoxid und Kohlenstoffdisulfid, wobei ein Scrambling von Sauerstoff- und Schwefelatomen beobachtet wird. Der in dieser Publikation eingesetzte Katalysator war ein Cr(Salen)Cl-Katalysator.

W. Clegg, R. W. Harrington, M. North, P. Villuendas, J. Org. Chem., 2010, 75, 6201-6207 beschreibt die Reaktion von Alkylenoxid und Kohlenstoffdisulfid, wobei nur cyclische Thiocarbonate erhalten werden. Der eingesetzte Katalysator war ein bimetallischer Al(Salen)-Komplex.

Die Publikation "Atom-Exchange Coordination Polymerization of Carbon Disulfide and Propylene Oxide by a Highly Effective Double-Metal Cyanide Complex" von Guo-Rong Qi et al., Macromolecules 2008, 41, 1587-1590 in Verbindung mit den experimentellen Daten, die in den *supporting information* online verfügbar sind, die Copolymerisation des Polypropylenglykols PPG-400, Propylenoxid und $CS_2$ in Gegenwart eines DMC-Katalysators, dessen Zusammensetzung mittels Elementaranalyse zu $Zn_3[Co(CN)_6]_2 \cdot 1.8\ ZnCl_2 \cdot 2.3$ *t*-BuOH $\cdot$ 3.8 $H_2O$ bestimmt wurde. Eine Lösung von PPG-400, Propylenoxid, $CS_2$ und des DMC-Katalysators wurde in einem Autoklaven zur Reaktion gebracht. Die Autoren berichten von einer Atomaustausch-Koordinationspolymerisation (AECP, atom-exchange coordination polymerization). Ein Schwefel enthaltendes Polymer mit einer komplexen Struktur wurde erhalten. Im Polymer vorliegende Struktureinheiten sind unter anderem -O-C(=O)-O- (8,0 mol.-%), -S-C(=O)-O- (53,6 Mol-%), -S-C(=O)-S- (17,6 Mol-%), -S-C(=S)-O- (16,0 Mol-%), und -S-C(=S)-S- (4,8 Mol-%). Die Selektivität (Mol-%) von linearem Polyetherthiocarbonatpolyol zu cyclischem Thiocarbonat betrug ≤ 85 %

Schwefel anstelle von Sauerstoff enthaltende Polyole sind für die Herstellung von Materialien mit hohem Brechungsindex von Interesse. Ihre Hydroxylgruppen gestatten eine Quervernetzung zu Polymeren. Der Brechungsindex

eines Materials ist mit der molekularen Polarisierbarkeit verknüpft. Die Fortpflanzung des Lichts durch ein Dielektrikum lässt sich dadurch beschreiben, dass das einfallende Licht ein oszillierendes Dipolmoment induziert, welches wiederum Licht derselben Frequenz abstrahlt. Die neu erzeugte Strahlung ist gegenüber der einfallenden Strahlung phasenverschoben, so dass sie sich durch das Medium langsamer als durch ein Vakuum fortpflanzt.

Ohne auf eine Theorie festgelegt zu sein wird angenommen, dass die leichtere Polarisierbarkeit der Elektronenhülle des Schwefels einem höheren Brechungsindex gegenüber Sauerstoffatome an der gleichen Stelle enthaltenden Materialien förderlich ist. Allerdings ist für die Höhe des Dipolmoments einer funktionellen Gruppe und damit auch für den Brechungsindex ebenfalls die lokale Symmetrie der entsprechenden funktionellen Gruppe von Bedeutung. Bevorzugt ist hier die Struktureinheit -S-C(=S)-O-. Vermieden werden sollten diejenigen anderen Struktureinheiten, welche aufgrund von Atomaustauschen bei der Copolymerisation von $CS_2$ und Alkylenoxiden auftreten.

Es war daher Aufgabe der vorliegenden Erfindung, ein Verfahren zur Herstellung von Polyetherthiocarbonatpolyolen bereitzustellen, welches die katalytische Copolymerisation von Kohlenstoffdisulfid mit Alkylenoxiden oder die katalytische Terpolymerisation von Kohlenstoffdisulfid, Alkylenoxiden in hohen Ausbeuten ermöglicht und bei dem ein Polyol mit einem möglichst hohen Brechungsindex erhalten wird. Im Speziellen war es hierbei die Aufgabe ein Verfahren zur Herstellung von Polyetherthiocarbonatpolyolen bereitzustellen, wobei eine hohe Selektivität zu linearen Polyetherthiocarbonatpolyolen erzielt werden sollte, ein d.h. hoher Anteil von linearen Polyetherthiocarbonatpolyolen (PETC) in Bezug auf die cyclische Thiocarbonate (CTC). Weiterhin war es auch eine Aufgabe einen hohen Gehalt an eingebautem Thiocarbonatgruppen -S-C(=S)- im Polyol zu erzielen, so dass der Anteil an Atomaustausch-Koordinationspolymerisation und somit der Anteil an -S-C(=O)- Gruppen möglichst gering ist.

Erfindungsgemäß gelöst wird die Aufgabe durch ein Verfahren zur Herstellung von Polyetherthiocarbonatpolyolen, umfassend den Schritt der Reaktion von Kohlenstoffdisulfid und mindestens eines Alkylenoxids in Gegenwart eines Doppelmetallcyanid-Katalysators und mindestens einer H-funktionellen Starterverbindung, wobei der Doppelmetallcyanid-Katalysator vor dem ersten Kontakt mit Kohlenstoffdisulfid zuvor mit mindestens einem Alkylenoxid kontaktiert wurde.

Dadurch, dass im erfindungsgemäßen Verfahren der DMC-Katalysator vor dem ersten Kontakt mit $CS_2$ zuvor mit mindestens einem Alkylenoxid kontaktiert wurde, findet eine Aktivierung des Katalysators statt. Während der Aktivierung kann durch eine exotherme chemische Reaktion eine Wärmeentwicklung auftreten, die zu Temperaturspitzen ("Hotspots") führen kann. Im Allgemeinen kann dem Aktivierungsschritt ein Schritt zum Trocknen des DMC-Katalysators und gegebenenfalls der H-funktionellen Starterverbindung bei erhöhter Temperatur und/oder reduziertem Druck, gegebenenfalls unter Durchleiten eines Inertgases durch die Reaktionsmischung, vorgelagert sein.

In den durch das erfindungsgemäße Verfahren hergestellten Polyetherthiocarbonatpolyolen lassen sich Atomaustausche während der Polymerisation kaum oder gar nicht nachweisen. Dieses kann durch IR-Spektroskopie und insbesondere durch das Fehlen von üblicherweise intensiven Carbonylbanden belegt werden, wobei der Fall von Kohlendioxid als weiterem Co-Monomer hier selbstverständlich eine gesonderte Betrachtung erforderlich macht.

Dadurch, dass die $CS_2$-Einheit ohne Atomaustausch in die Polymerkette eingebaut wird, kann die für einen hohen Brechungsindex des Materials gewünschte Struktureinheit -S-C(=S)-O-, in der Folge als Thiocarbonatgruppen (-S(C=O)-) Gruppe bezeichnet, im Polyol gebildet werden.

Allgemein können für das erfindungsgemäße Verfahren Alkylenoxide (Epoxide) mit 2-45 Kohlenstoffatomen eingesetzt werden. In einer bevorzugten Ausführungsform des Verfahrens wird das Alkylenoxid ausgewählt aus mindestens einer Verbindung der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, Allylglycedylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylacrylat und Glycidylmethacrylat ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether sowie epoxidfunktionelle Alkyoxysilane wie beispielsweise 3-Glycidyloxypropyltrimethoxysilan, 3-Glycidyloxypropyltriethoxysilan, 3-Glycidyloxypropyltri-propoxysilan, 3-Glycidyloxypropyl-methyl-dimethoxysilan, 3-Glycidyloxypropylethyldiethoxysilan und 3-Glycidyloxypropyltrlisopropoxysilan.

Als geeignete H-funktionelle Starterverbindungen, auch als Starter bezeichnet, können Verbindungen mit für die Alkoxylierung aktiven H-Atomen eingesetzt werden. Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Starterverbindung können beispielsweise mindestens eine Verbindung ausgewählt werden aus der Gruppe bestehend aus ein- oder mehrwertige Alkohole, mehrwertige Amine, mehrwertige

Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, polymere Formaldehydverbindungen, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindung geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydro-phthalsäure-anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole, Polycarbonatpolyole und/oder Polyetherestercarbonatpolyole als H-funktionelle Starterverbindungen eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole mit einer Zusammensetzung nach der allgemeinen Formel (II),

HO-(CH2)X-OH (II)

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um mindestens eine Verbindung ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 8000 g/mol, bevorzugt ein Molekulargewicht und mehr bevorzugt von ≥ 92 g/mol bis ≤ 2000 g/mol.

Als Katalysator für die Herstellung der erfindungsgemäßen Polyethercarbonatpolyole kann beispielsweise ein DMC-Katalysator (Doppel-Metall-Cyanid-Katalysator) eingesetzt. Es können zusätzlich oder alternativ auch andere Katalysatoren eingesetzt werden. Für die Copolymerisation von Alkylenoxiden und $CO_2$ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind

im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (III) auf,

$$M(X)_n \qquad (III),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M_r(X)_3 \qquad (IV),$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M(X)_s \qquad (V),$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (VI) auf,

$$M(X)_t \qquad (VI),$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VII) auf

$$(Y)_aM'(CN)_b(A)_c \qquad (VII),$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.
Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VIII)

$$M_x[M'_{x'}(CN)_y]_z \qquad (VIII),$$

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist
x = 3, x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus mindestens einer Verbindung der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen.

Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Ausführungsformen des Verfahrens und weitere Aspekte der Erfindung werden nachfolgend beschrieben. Sie können beliebig miteinander kombiniert werden, sofern sich aus dem Kontext nicht eindeutig das Gegenteil ergibt.

In einer Ausführungsform des erfindungsgemäßen Verfahrens wird das mindestens eine Alkylenoxid ausgewählt aus der Gruppe bestehend aus Ethylenoxid, Propylenoxid und Styroloxid.

In einer weiteren Ausführungsform des erfindungsgemäßen Verfahrens wird die mindestens eine H-funktionelle Starterverbindung ausgewählt aus der Gruppe der Polyetherpolyole, Polyesterpolyole, Polyetheresterpolyole, Polyethercarbonatpolyole, Polycarbonatpolyole und Polyacrylatpolyole, bevorzugt Polyetherpolyole und Polyethercarbonatpolyole.

In einer weiteren Ausführungsform des erfindungsgemäßen Verfahrens liegt das molare Verhältnis des mindestens einem eingesetztem Alkylenoxid zu dem eingesetztem Kohlenstoffdisulfid in einem Bereich von ≥1:1 bis ≤ 100:1, bevorzugt von ≥1:1 bis ≤ 50:1 und besonders bevorzugt von ≥1:1 bis ≤ 20:1.

Eine weitere Ausführungsform des erfindungsgemäßen Verfahrens zeichnet sich dadurch aus, dass

(α) in einem Reaktor der Doppelmetallcyanid-Katalysator und mindestens eine H-funktionelle Starterverbindung vorgelegt wird und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird;

(β) zu dem Gemisch aus Schritt (α) eine Teilmenge (bezogen auf die Gesamtmenge der in den Schritten (β) und (γ) eingesetzten Menge an Alkylenoxiden) des mindestens einem Alkylenoxid bei Temperaturen von 50 bis 200 °C zugegeben wird;

(γ) Kohlenstoffdisulfid und mindestens ein Alkylenoxid zu der aus Schritt (β) resultierenden Mischung hinzugefügt werden ("Copolymerisation"). Die für die Copolymerisation eingesetzten Alkylenoxide können gleich oder verschieden sein von den bei Schritt (β) eingesetzten Alkylenoxiden.

In einer bevorzugten Variante beträgt die bei der Aktivierung in Schritt (β) eingesetzte Menge des mindestens einem Alkylenoxiden 0,1 bis 35,0 Gew.-%, bevorzugt 1,0 bis 30,0 Gew.-%, besonders bevorzugt 2,0 bis 25,0 Gew.-% (bezogen auf die im Schritt (α) eingesetzte Menge an Starterverbindung). Das Alkylenoxid kann in einem Schritt oder schrittweise in mehreren Teilmengen zugegeben werden. Der DMC-Katalysator wird vorzugsweise in einer Menge eingesetzt, so dass der Gehalt an DMC-Katalysator im resultierenden Polyetherthiocarbonatpolyol 10 bis 10000 ppm, besonders bevorzugt 20 bis 5000 ppm und höchst bevorzugt 50 bis 500 ppm beträgt.

Zu Schritt (α):

Die Zugabe der einzelnen Komponenten kann gleichzeitig oder nacheinander in beliebiger Reihenfolge erfolgen; bevorzugt wird zunächst DMC-Katalysator vorgelegt und gleichzeitig oder anschließend H-funktionelle Starterverbindung zugesetzt.

Der DMC-Katalysator kann in fester Form oder als Suspension in einer H-funktionellen Starterverbindung zugegeben werden. Wird der DMC-Katalysator als Suspension zugegeben, wird diese bevorzugt der mindestens einen H-funktionellen Starterverbindung zugefügt.

Zu Schritt (β):

Das Einstellen einer Atmosphäre aus Inertgas und die Dosierung des mindestens einem Alkylenoxid können prinzipiell in unterschiedlicher Weise erfolgen. Der Vordruck wird bevorzugt durch Einleiten von Inertgas eingestellt, wobei der Druck (absolut) 10 mbara bis 100 bara, vorzugsweise 100 mbara bis 50 bara und bevorzugt 500 mbara bis

50 bara beträgt. Der Start der Dosierung des Alkylenoxids kann aus dem Vakuum heraus oder bei einem zuvor gewählten Vordruck erfolgen. Als Gesamtdruck (absolut) der Atmosphäre aus Inertgas und ggf. Alkylenoxid wird in Schritt (β) vorzugsweise ein Bereich von 10 mbara bis 100 bara, vorzugsweise 100 mbara bis 50 bara und bevorzugt 500 mbara bis 50 bara eingestellt. Gegebenenfalls wird während oder nach der Dosierung des Alkylenoxids der Druck durch Einleiten von weiterem Inertgas nachgeregelt, wobei der Druck (absolut) 10 mbara bis 100 bara, vorzugsweise 100 mbara bis 50 bara und bevorzugt 500 mbara bis 50 bara beträgt.

Zu Schritt (γ):

Die Dosierung von Kohlenstoffdisulfid und des mindestens einem Alkylenoxid kann simultan, wechselweise oder sequentiell erfolgen. Es ist auch möglich, während der Zugabe von Kohlenstoffdisulfid und des Alkylenoxids den Druck im Reaktor allmählich oder schrittweise zu steigern oder zu senken oder gleich zu lassen. Vorzugsweise wird der Gesamtdruck während der Reaktion durch eine Nachdosierung an Inertgas konstant gehalten. Die Dosierung von Kohlenstoffdisulfid und des mindestens einem Alkylenoxid erfolgt simultan, wechselweise oder sequentiell. Es ist möglich, das Kohlenstoffdisulfid und Alkylenoxid mit konstanter Dosierrate zu dosieren oder die Dosierrate allmählich oder schrittweise zu steigern oder zu senken oder Kohlenstoffdisulfid und Alkylenoxid portionsweise zuzugeben. Bevorzugt wird das Kohlenstoffdisulfid und Alkylenoxid mit konstanter Dosierrate dem Reaktionsgemisch zugegeben. Werden mehrere Alkylenoxide zur Synthese der Polyetherthiocarbonatpolyole eingesetzt, so können die Alkylenoxide einzeln oder als Gemisch dosiert werden können. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyetherthiocarbonatpolyole zu synthetisieren.

In einer bevorzugten Ausführungsform hat sich für das erfindungsgemäße Verfahren sich weiterhin gezeigt, dass die Copolymerisation (Schritt (γ)) zur Herstellung der Polyetherthiocarbonatpolyole bei 50 bis 150 °C, bevorzugt bei 60 bis 145 °C, besonders bevorzugt bei 70 bis 140°C und ganz besonders bevorzugt bei 90 bis 130°C durchgeführt wird. Unterhalb von 50 °C läuft die Reaktion nur sehr langsam ab. Bei Temperaturen oberhalb von 150 °C steigt die Menge an unerwünschten Nebenprodukten stark an.

Es ist in der vorstehenden Ausführungsform bevorzugt, dass in Schritt (γ) Kohlenstoffdisulfid und das mindestens eine Alkylenoxid zu der aus Schritt (β) resultierenden Mischung kontinuierlich zudosiert werden.

Eine weitere Ausführungsform des erfindungsgemäßen Verfahrens zeichnet sich dadurch aus, dass

(α') in einem Reaktor der Doppelmetallcyanid-Katalysator sowie die mindestens H-funktionelle Starterverbindung und/oder ein Suspensionsmittel, das keine H-funktionellen Gruppen enthält, vorgelegt werden und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird;

(β') zu dem Gemisch aus Schritt (α') eine Teilmenge (bezogen auf die Gesamtmenge der in den Schritten (β') und (γ') eingesetzten Menge an Alkylenoxiden) des mindestens einem Alkylenoxids bei Temperaturen von 50 bis 200 °C zugegeben wird und danach die Zugabe des mindestens einem Alkylenoxids unterbrochen wird;

(γ') mindestens ein Alkylenoxid, Kohlenstoffdisulfid und mindestens eine H-funktionelle Starterverbindung sowie gegebenenfalls Doppelmetallcyanidkatalysator während der Reaktion kontinuierlich in den Reaktor zudosiert wird.

Es ist in der vorstehenden Ausführungsform bevorzugt, dass im Schritt (α') in einem Reaktor der Doppelmetallcyanid-Katalysator, mindestens ein Suspensionsmittel, das keine H-funktionellen Gruppen enthält, vorgelegt wird und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird.

Es ist ferner bevorzugt, dass im Schritt (γ') die Dosierung der mindestens einen H-funktionellen Starterverbindung zeitlich vor der Zugabe des mindestens einen Alkylenoxids beendet wird.

In einer bevorzugten Ausführungsform hat sich für das erfindungsgemäße Verfahren sich weiterhin gezeigt, dass die Copolymerisation (Schritt (γ')) zur Herstellung der Polyetherthiocarbonatpolyole bei 50 bis 150 °C, bevorzugt bei 60 bis 145 °C, besonders bevorzugt bei 70 bis 140°C und ganz besonders bevorzugt bei 90 bis 130°C durchgeführt wird. Unterhalb von 50 °C läuft die Reaktion nur sehr langsam ab. Bei Temperaturen oberhalb von 150 °C steigt die Menge an unerwünschten Nebenprodukten stark an.

Bei einer Durchführung des Verfahrens α'/β'/β'1/ β'2/γ' im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte

Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 105 mol% Äquivalente (jeweils bezogen auf die gesamte Menge an H-funktionellen Starterverbindungen).

In einer weiteren Ausführungsform des erfindungsgemäßen Verfahrens ist vorgesehen, dass wenigstens Schritte (γ) oder (γ') zusätzlich in Gegenwart von Kohlendioxid durchgeführt werden. Vorzugsweise wird ein Überschuss an Kohlendioxid bezogen auf die berechnete Menge an eingebautem Kohlendioxid im Polyetherthiocarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bara, bevorzugt 0,1 bis 110 bara, besonders bevorzugt von 1 bis 100 bara für die Copolymerisation zur Herstellung der Polyetherthiocarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In den Schritten (β) und/oder (γ) wird das Kohlendioxid bevorzugt in die Mischung eingeleitet durch

(i) Begasung des Reaktionsgemisches im Reaktor von unten (beispielsweise über ein Einleitrohr oder einen Begasungsring (Verteilring) mit Führung des Gases unterhalb des Rührflügels) und je nach Gasbeladung gegebenenfalls in Kombination mit einem Gas-Zerteilungsrührer (beispielsweise ein Scheibenrührer, Schaufelrührer, Rushton-Turbine (zum Beispiel Lightnin R-100®, Ekato PHASE-JET®, Smith-Turbine® von Philadelphia Mixing Solutions, Chemineer BT-6® oder CD-6® Rührflügel), wobei gegebenenfalls auf der Rührwelle weitere Rührorgane (beliebigen Typs, z.B. je nach Schlankheitsgrad des Reaktors axial-fördernde Turbinen, den Wärmeübergang zu innen-liegenden Kühlflächen unterstützende und/oder den Stoffübergang über die Flüssigkeitsoberfläche fördernde Rührorgane) angeordnet sind; eine Kombination von zwei oder mehreren Rührorganen hat den technischen Vorteil, dass der Stoffübergang des Gases in die flüssige Phase an der Oberfläche der Reaktionsmischung verbessert werden kann;

(ii) Verwendung eines Hohlwellenrührers (d.h. mittels des Prinzips des Strahlsaugers), beispielsweise als Rohrrührer, Schrägblatt-Turbine mit Hohlflügeln, Ekato GASJET®, PREMEX Laborbegasungsrüher der "br"-Serie, Laborbegasungsrührer von Parr Instruments; Die Verwendung eines Hohlwellenrührers bewirkt, dass die sich im Gasraum ansammelnde Gasphase über eine Hohlwelle angesaugt und erneut von unten in die Reaktionsmischung eingebracht wird;

(iii) Kombination aus den Dosierungen gemäß (i) und (ii), was vorteilhaft für den Betrieb bei konstantem Füllstand im Reaktor ist; Beispielsweise kann die Kombination aus den Dosierungen gemäß (i) und (ii) derart erfolgen, dass eine Begasung des Reaktionsgemisches im Reaktor von unten gemäß einer der unter (i) genannten Möglichkeiten mit einem Hohlwellenrührer gemäß (ii) (wie beispielsweise einem Gaszerteilungsrührer mit darüber angeordnetem Strahlsauger als zweite Dispergierstufe) kombiniert wird, vorzugsweise derart, dass die Einleitung des Gases von unten unterhalb des Hohlwellenrührers erfolgt; und/oder

(iv) Begasung über die Flüssigkeitsoberfläche durch Einsatz entsprechender, typischerweise mehrstufiger ausgeführter Rührorgane (wie z.B. MIG oder Ekato MIG / INTERMIG®) bzw. mittels an der Flüssigkeitsoberfläche wirkender Rührorgane (z.B. Gitterrührer).

Der Hohlwellenrührer ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtem Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen (und/oder kombiniert werden mit einer Absaugung des Gases aus dem Gasraum über der Reaktionsmischung und anschließender Re-Kompression des Gases. Beispielsweise wird das aus dem Gasraum über der Reaktionsmischung abgesaugte und komprimierte Gas, gegebenenfalls gemischt mit frischem Kohlendioxid und/oder Alkylenoxid, in das Reaktionsgemisches gemäß (i), (ii), (iii) und/oder (iv) eingeleitet. Bevorzugt wird über frisch zudosiertes Kohlendioxid der Druckabfall ausgeglichen, der über Einbau des Kohlendioxids und des Alkylenoxids bei der

Copolymerisation in das Reaktionsprodukt entsteht.

Die Einleitung des Alkylenoxids kann separat oder zusammen mit dem $CO_2$ sowohl über die Flüssigkeitsoberfläche oder direkt in die flüssige Phase erfolgen. Bevorzugt erfolgt die Einleitung des Alkylenoxids direkt in die flüssige Phase, da dies den Vorteil hat, dass eine rasche Durchmischung des eingebrachten Alkylenoxids mit der flüssigen Phase erfolgt und so lokale Konzentrationsspitzen von Alkylenoxid vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die Auslegung der Rührbedingungen sind fallbezogen vom Fachmann in Abhängigkeit der Reaktionsbedingungen (z.B. Flüssigphasenviskosität, Gasbeladung, Oberflächenspannung) nach Stand der Rührtechnik vorzunehmen, um z.B. ein Überfluten eines von unten begasten Rührorgans sicher zu vermeiden bzw. den gewünschten Leistungseintrag und/oder Stoffübergang im Begasungszustand sicherzustellen. Gegebenenfalls enthält der Reaktor Einbauten wie beispielsweise Stromstörer und/oder Kühlflächen (ausgeführt als Rohr, Wendel, Platten oder in ähnlicher Form), Begasungsring und/oder Einleitrohr. Weitere Wärmetauscherflächen können in einem Umpumpkreislauf angeordnet werden, wobei die Reaktionsmischung dann über geeignete Pumpen (z.B. Schraubenspindelpumpe, Zentrifugal- oder Zahnradpumpe) gefördert wird. Der Kreislaufstrom kann hierbei z.B. auch über eine Injektordüse in den Reaktor zurückgeführt werden, wodurch ein Teil des Gasraums angesogen und zwecks Verbesserung des Stoffübergangs intensiv mit der Flüssigphase vermischt wird.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Die Schritte $\alpha/\alpha'$, $\beta/\beta'$ und $\gamma/\gamma'$ können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte $\alpha/\alpha'$, $\beta/\beta'$ und $\gamma/\gamma'$ in unterschiedlichen Reaktoren durchgeführt, kann für jeden Schritt ein unterschiedlicher Reaktortyp verwenden werden.

Polyetherthiocarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt $\beta/\beta'$) beträgt vorzugsweise > 0 bis 100 Gew.-%, besonders bevorzugt > 0 bis 50 Gew.%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt $\gamma/\gamma'$) beträgt vorzugsweise > 0 bis 40 Gew.%, besonders bevorzugt > 0 bis 25 Gew.%, höchst bevorzugt > 0 bis 15 Gew.-% (jeweils bezogen auf das Gewicht der Reaktionsmischung).

Bei Reaktionsführung in einem Rohrreaktor werden die gemäß dem Schritt $\alpha/\alpha'$ getrocknete Katalysator-Starter-Mischung oder die gemäß den Schritten $\alpha/\alpha'$ und $\beta/\beta'$ aktivierte Katalysator-Starter-Mischung und gegebenenfalls weiterer Starter sowie Alkylenoxide und Kohlendioxid kontinuierlich durch ein Rohr gepumpt. Bei Verwendung einer gemäß dem Schritt $\alpha/\alpha'$ getrockneten Katalysator-Starter-Mischung erfolgt die Aktivierung gemäß Schritt $\beta/\beta'$ im ersten Teil des Rohrreaktors und die Copolymerisation gemäß Schritt $\beta/\beta'$ im zweiten Teil des Rohrreaktors. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge des Epoxids kann am Eingang des Reaktors eingebracht werden. Die Restmenge des Epoxids wird bevorzugt über mehrere Dosierstellen, die entlang dem Reaktor angeordnet sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyetherthiocarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um vollständigen Umsatz zu realisieren, ist dem Reaktionsapparat, in dem der Schritt $\gamma/\gamma'$ durchgeführt wird, häufig ein weiterer Kessel oder ein Rohr ("Verweilrohr") nachgeschaltet, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt γ/γ' durchgeführt wird. Der Druck in dem nachgeschalteten Reaktor kann jedoch auch höher oder niedriger gewählt werden. In einer weiteren bevorzugten Ausführungsform wird gegebenenfalls mit eingesetztes Kohlendioxid nach dem Reaktionsschritt γ/γ' ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und bevorzugt bei 20 bis 100°C. Das Reaktionsgemisch enthält am Ende des nachgeschalteten Reaktors vorzugsweise weniger als 0,05 Gew.-% Alkylenoxid.

Die vorliegende Erfindung betrifft ebenfalls ein Polyetherthiocarbonatpolyol, erhältlich durch ein erfindungsgemäßes Verfahren, wobei der Gesamtgehalt der funktionellen Gruppe:

-S-C(=O)-

im Polymer ≤ 21 mol-% beträgt.

Das Auftreten dieser funktionellen Gruppe wird als Anzeichen für einen Atomaustausch während der Polymerisation gesehen. Dieses tritt beim durch das erfindungsgemäße Verfahren gebildeten Polymer kaum oder gar nicht auf. Die Detektion dieser funktionellen Gruppe gelingt anhand der intensiven Carbonylbande im IR-Spektrum.

Die nach dem erfindungsgemäßen Verfahren erhältlichen Polyetherthiocarbonatpolyole zeichnen sich durch einen hohen Brechungsindex aus, sind vernetzbar und können beispielsweise zur Herstellung von Beschichtungen, Schäumen, Dichtmassen, thermoplastischen Kunststoffen, duromeren Kunststoffen und Kautschuken eingesetzt werden. Die Polyetherthiocarbonatpolyole können problemlos verarbeitet werden, insbesondere durch Umsetzung mit Di- und/oder Polyisocyanaten zu Polyurethanen. Für Polyurethananwendungen werden vorzugsweise Polyetherthiocarbonatpolyole eingesetzt, die auf einer H-funktionellen Starterverbindung basieren, welche eine Funktionalität von mindestens 2 besitzt. Des Weiteren können die nach dem erfindungsgemäßen Verfahren erhältlichen Polyetherthiocarbonatpolyole in Anwendungen wie Wasch- und Reinigungsmittelformulierungen oder kosmetischen Formulierungen verwendet werden.

Die erfindungsgemäß erhaltenen Polyetherthiocarbonatpolyole haben vorzugsweise eine OH-Funktionalität (d.h. durchschnittlich Anzahl von OH-Gruppen pro Molekül), welche von der von mindestens 0,8, bevorzugt von 1 bis 8, besonders bevorzugt von 1 bis 6 und ganz besonders bevorzugt von 2 bis 4. Das Molekulargewicht Mn der erhaltenen Polyetherthiocarbonatpolyole beträgt mindestens 400, bevorzugt 400 bis 1000000 g/mol und besonders bevorzugt 500 bis 60000 g/mol.

Vorzugsweise hat das erfindungsgemäße Polyetherthiocarbonatpolyol einen Brechungsindex $n_D$ (20 °C) von ≥ 1.45.

Ein weiterer Gegenstand der vorliegenden Erfindung ist ein Polyurethanpolymer, erhältlich aus der Reaktion einer Polyolkomponente A umfassend ein erfindungsgemäßes Polyetherthiocarbonatpolyol A1 mit mindestens einer Polyisocyanatkomponente B.

Als Polyisocyanatkomponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (IX)

$$Q(NCO)n \qquad (IX)$$

in der
n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Geeignete Polyisocyanatkomponenten B sind die dem Fachmann an sich bekannten aromatischen, araliphatischen, aliphatischen oder cycloali¬pha¬tischen Polyisocyanate, welche auch Iminooxadiazindion , Isocyanurat , Uret¬dion-, Urethan , Allophanat , Biuret , Harnstoff-, Oxadiazintrion, Oxazolidinon-, Acylharnstoff-, Carbamat- und/oder Carbodiimid-Strukturen aufweisen können. Diese können in B einzeln oder in beliebigen Mischungen untereinander eingesetzt werden.

Die vorstehend genannten Polyisocyanatkomponenten B basieren dabei auf dem Fachmann an sich bekannten Diisocyanaten oder Triisocyanaten oder höher funktionellen Isocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Diisocyanate oder Triisocyanate oder höher funktionellen Isocyanaten sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan,

1,10-Diisocyanatodecan, 1,3- und 1,4-Diiso¬cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di¬isocyanatodicyclohexylmethan (Desmodur® W, Covestro AG, Leverkusen, DE), 4-Isocyanatomethyl-1,8-octandiisocyanat (Triisocyanatononan, TIN), ω,ω"-'-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanato-methy¬cyclo¬¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diiso¬cyana¬to¬diphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate.

In einer bevorzugten Ausführungsform der Erfindung ist das Polyurethanpolymer ein Polyurethanschaumstoff wie beispielsweise ein Polyurethanhartschaumstoff oder Polyurethanweichschaumstoff.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Gegenstand der vorliegenden Erfindung ist ein Verfahren zur Herstellung von Polyurethanschaumstoffen durch Umsetzung von

A1 mindestens einem erfindungsgemäßen Polyetherthiocarbonatpolyol,

A2 mindestens einer, gegenüber Isocyanaten reaktionsfähigen Wasserstoffatomen aufweisenden, Verbindung mit einem Molekulargewicht von 400 - 15.000,
und/oder

A3 mindestens einer, gegebenenfalls gegenüber Isocyanaten reaktionsfähigen Wasserstoffatomen aufweisenden, Verbindung mit einem Molekulargewicht von 62 - 399,

A4 Wasser und/oder physikalischen Treibmittel,

A5 ggf. Hilfs- und Zusatzstoffe wie

a) Katalysatoren,

b) oberflächenaktive Zusatzstoffe,

c) Pigmente oder Flammschutzmittel,

mit mindestens einer

B Polyisocyanatkomponente.

Die Komponente A2 sind Verbindungen mit mindestens zwei gegenüber Isocyanten reaktionsfähigen Wasserstoffatomen von einem Molekulargewicht in der Regel von 400 - 15.000 g/mol. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 g/mol bis 6000 g/mol, vorzugsweise 2000 g/mol bis 6000 g/mol, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyether sind erfindungsgemäß bevorzugt.

Die Komponente A3 sind Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten

reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0 007 502, Seiten 16 - 17, beschrieben.

Als Komponente A4 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Als Komponente A5 werden gegebenenfalls Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesodere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt
Harnstoff, Derivate des Harnstoffs und/oder
Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethyl¬aminopropyl)-N-isopropanolamin, N,N,N-Trimethyl-N-hydroxyethyl-bisaminoethylether und 3-Dimethylaminopropylamin.

In einer ersten Ausführung betrifft die Erfindung Verfahren zur Herstellung von Polyetherthiocarbonatpolyolen, umfassend den Schritt der Reaktion von Kohlenstoffdisulfid und mindestens eines Alkylenoxids in Gegenwart eines Doppelmetallcyanid-Katalysators und mindestens einer H-funktionellen Starterverbindung, dadurch gekennzeichnet, dass der Doppelmetallcyanid-Katalysator vor dem ersten Kontakt mit Kohlenstoffdisulfid zuvor mit mindestens einem Alkylenoxid kontaktiert wurde.

In einer zweiten Ausführung betrifft die Erfindung ein Verfahren gemäß der ersten Ausführungsform, wobei das mindestens eine Alkylenoxid ausgewählt wird aus der Gruppe bestehend aus Ethylenoxid, Propylenoxid und Styroloxid.

In einer dritten Ausführung betrifft die Erfindung ein Verfahren gemäß der ersten oder zweiten Ausführungsform, wobei die mindestens eine H-funktionelle Starterverbindung ausgewählt ist aus der Gruppe der Polyetherpolyole, Polyesterpolyole, Polyetheresterpolyole, Polyethercarbonatpolyole, Polycarbonatpolyole und Polyacrylatpolyole.

In einer vierten Ausführung betrifft die Erfindung ein Verfahren gemäß einer der ersten bis dritten Ausführungsform, wobei das molare Verhältnis des mindestens einem eingesetztem Alkylenoxid zu dem eingesetztem Kohlenstoffdisulfid in einem Bereich von $\geq$ 1:1 bis $\leq$ 100:1, bevorzugt von $\geq$ 1:1 bis $\leq$ 50:1 und besonders bevorzugt von $\geq$ 1:1 bis $\leq$ 20:1 liegt.

In einer fünften Ausführung betrifft die Erfindung ein Verfahren gemäß einer der ersten bis vierten Ausführungsform, wobei

($\alpha$) in einem Reaktor der Doppelmetallcyanid-Katalysator sowie die mindestens eine H-funktionelle Starterverbindungen vorgelegt werden und durch den Reaktor bei einer Temperatur von 50 bis 200 °C ein Inertgas geleitet wird

und gleichzeitig durch Entfernen des Inertgases ein reduzierter Druck (absolut) von 10 mbara bis 800 mbara im Reaktor eingestellt wird;

(β) zu dem Gemisch aus Schritt (α) eine Teilmenge (bezogen auf die Gesamtmenge der in den Schritten (β) und (γ) eingesetzten Menge an Alkylenoxiden) des mindestens einem Alkylenoxid bei Temperaturen von 50 bis 200 °C zugegeben wird;

(γ) Kohlenstoffdisulfid und mindestens ein Alkylenoxid zu der aus Schritt (β) resultierenden Mischung hinzugefügt werden.

In einer sechsten Ausführung betrifft die Erfindung ein Verfahren gemäß der fünften Ausführung, wobei in Schritt (γ) Kohlenstoffdisulfid und das mindestens eine Alkylenoxid zu der aus Schritt (β) resultierenden Mischung kontinuierlich zudosiert wird.

In einer siebten Ausführung betrifft die Erfindung ein Verfahren gemäß einer der fünften oder sechsten Ausführungsform, wobei Schritt (γ) bei 50 bis 150 °C, bevorzugt bei 60 bis 145 °C, besonders bevorzugt bei 70 bis 140°C und ganz besonders bevorzugt bei 90 bis 130°C durchgeführt wird.

In einer achten Ausführung betrifft die Erfindung ein Verfahren gemäß einer der ersten bis vierten Ausführungsform, wobei im Schritt

(α') in einem Reaktor der Doppelmetallcyanid-Katalysator sowie die mindestens H-funktionelle Starterverbindung und/oder ein Suspensionsmittel, das keine H-funktionellen Gruppen enthält, vorgelegt werden und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird;

(β') zu dem Gemisch aus Schritt (α') eine Teilmenge (bezogen auf die Gesamtmenge der in den Schritten (β') und (γ') eingesetzten Menge an Alkylenoxiden) des mindestens einem Alkylenoxids bei Temperaturen von 50 bis 200 °C zugegeben wird und danach die Zugabe des mindestens einem Alkylenoxids unterbrochen wird;

(γ') mindestens ein Alkylenoxid, Kohlenstoffdisulfid und mindestens eine H-funktionelle Starterverbindung sowie gegebenenfalls Doppelmetallcyanidkatalysator während der Reaktion kontinuierlich in den Reaktor zudosiert wird.

In einer neunten Ausführung betrifft die Erfindung ein Verfahren gemäß der achten Ausführungsform, wobei

(α') in einem Reaktor der Doppelmetallcyanid-Katalysator ein Suspensionsmittel, das keine H-funktionellen Gruppen enthält, vorgelegt wird und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird.

In einer zehnten Ausführung betrifft die Erfindung ein Verfahren gemäß der siebten oder achten Ausführungsform, wobei im Schritt (γ') die Dosierung der mindestens einen H-funktionellen Starterverbindung zeitlich vor der Zugabe des mindestens einen Alkylenoxids beendet wird.

In einer elften Ausführung betrifft die Erfindung ein Verfahren gemäß einer der achten bis zehnten Ausführungsform, wobei Schritt (γ) bei 50 bis 150 °C, bevorzugt bei 60 bis 145 °C, besonders bevorzugt bei 70 bis 140°C und ganz besonders bevorzugt bei 90 bis 130°C durchgeführt wird.

In einer zwölften Ausführung betrifft die Erfindung ein Polyetherthiocarbonatpolyol, erhältlich durch ein Verfahren gemäß einer der ersten bis elften Ausführung, wobei der Gesamtgehalt der funktionellen Gruppe:

-S-C(=O)-

im Polymer ≤ 21 mol -% beträgt.

In einer dreizehnten Ausführung betrifft die Erfindung ein Polyetherthiocarbonatpolyol gemäß der zwölften Ausführung mit einem Brechungsindex $n_D$ (20 ° C) von ≥ 1.45.

In einer vierzehnten Ausführung betrifft die Erfindung ein Polyurethanpolymer, erhältlich aus der Reaktion einer Polyolkomponente umfassend ein Polyetherthiocarbonatpolyols gemäß der zwölften oder dreizehnten Ausführung mit mindestens einer Polyisocyanatkomponente.

In einer fünfzehnten Ausführung betrifft die Erfindung ein Polyurethanpolymer gemäß der vierzehnten Ausführung, wobei das Polyurethanpolymer ein Polyurethanschaumstoff ist.

In einer sechzehnten Ausführung betrifft die Erfindung ein Verfahren gemäß einer der fünften bis siebten

Ausführung, wobei das Produkt nach Beendigung des Schrittes (γ) entnommen wird.

In einer siebzehnten Ausführung betrifft die Erfindung ein Verfahren gemäß einer der fünften bis siebten Ausführung, wobei das Produkt kontinuierlich in Schritt (β) und/oder Schritt (γ), bevorzugt in Schritt (β) und/oder Schritt (γ), entnommen wird.

In einer achtzehnten Ausführung betrifft die Erfindung ein Verfahren gemäß einer der achten bis elften Ausführung, wobei das Produkt nach Beendigung des Schrittes (γ') entnommen wird.

In einer neunzehnten Ausführung betrifft die Erfindung ein Verfahren gemäß einer der achten bis elften Ausführung, wobei das Produkt kontinuierlich in Schritt (β') und/oder Schritt (γ'), bevorzugt in Schritt (β') und/oder Schritt (γ'), entnommen wird.

## Beispiele

Die Erfindung wird anhand der nachfolgenden Beispiele näher beschrieben, ohne jedoch darauf beschränkt zu sein.

Eingesetzte H-funktionelle Starterverbindungen (Starter):

PET-1 difunktionelles Poly(oxypropylen)polyol mit einer OH-Zahl von 112 $mg_{KOH}/g$

PET-2 trifunktionelles Poly(oxypropylen)polyol mit einer OH-Zahl von 240 $mg_{KOH}/g$

Der DMC-Katalysator wurde hergestellt nach Beispiel 6 von WO-A 01/80994.

Der in den Beispielen eingesetzte 300 ml Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [Schritt (β)] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [Schritt (β)] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Schritt (γ)] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf mit einem Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas abgesaugt wurde und über die Hohlwelle des Rührers in die Reaktionsmischung eingeleitet wurde.

Bei der Copolymerisation von Propylenoxid und $CS_2$ resultierte neben dem cyclischen Propylenthiocarbonat das Polyetherthiocarbonatpolyol, welches einerseits in Formel (X) gezeigte Polythiocarbonat-Einheiten (-S(C=S)-) enthält,

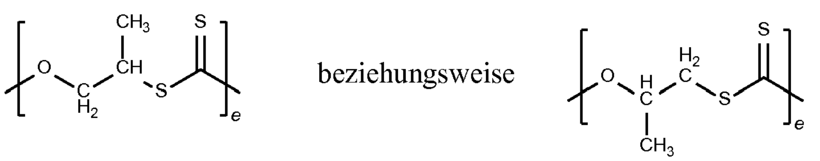

(X)

und andererseits in Formel (XI) gezeigte Polythiocarbonat-Einheiten (-S(C=O)-) enthält.

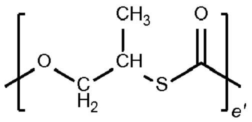 beziehungsweise 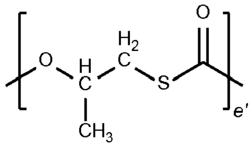 (XI)

Bei der Copolymerisation von Propylenoxid und $CS_2$ resultierte neben dem cyclischen Propylenthiocarbonat das Polyetherthiocarbonatpolyol, welches zusätzlich in Formel (XII) gezeigte Polyether-Einheiten enthält,

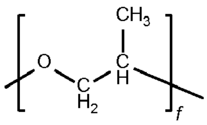 beziehungsweise 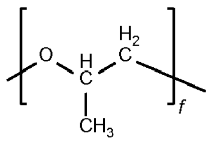 (XII)

Die Charakterisierung des Reaktionsgemisches erfolgte durch $^1$H-NMR Spektroskopie, IR-Spektroskopie und Gelpermeations-Chromatographie:

Das Verhältnis der Menge an cyclischem Propylenthiocarbonat zu Polyetherthiocarbonatpolyol (Selektivität) und das molare Verhältnis von Thiocarbonatgruppen zu Ethergruppen im Polyetherthiocarbonatpolyol (Verhältnis e/f) sowie der Anteil des umgesetzten Propylenoxids (C in mol%) wurden mittels $^1$H-NMR Spektroskopie bestimmt. Die Probe wurde jeweils in deuteriertem Chloroform gelöst und auf einem Spektrometer der Firma Bruker (AV400, 400 MHz) vermessen. Die relevanten Resonanzen im $^1$H-NMR Spektrum (bezogen auf TMS = 0 ppm), die zur Integration verwendet wurden, sind wie folgt:

I1: 1,11 - 1,16: $CH_3$ der Polyether-Einheiten, der Polythiocarbonat-Einheiten und der Polythiocarbonat-Einheiten (-S(C=O)-) Fläche der Resonanz entspricht drei H Atomen

I2: 1,53 - 1,55: $CH_3$ Gruppe des cyclischen Monothiocarbonats, Fläche der Resonanz entspricht drei H Atomen

I3: 1,64 - 1,66: $CH_3$ Gruppe des cyclischen Thiocarbonats, Fläche der Resonanz entspricht drei H Atomen

I4: 4,47 - 4,58: $CH_2$ Gruppe der Polythiocarbonat-Einheiten, Fläche der Resonanz entspricht zwei H Atomen

I5: 5,10 - 5,12: CH Gruppe der Polythiocarbonat-Einheiten (-S(C=O)-), Fläche der Resonanz entspricht einem H Atom

I6: 5,77 - 5,81: CH Gruppe der Polythiocarbonat-Einheiten, Fläche der Resonanz entspricht einem H Atom

Angegeben sind das molare Verhältnis der Menge an linearem Polyetherthiocarbonatpolyol (P mol.-%) zu cyclischem Thiocarbonat bezogen auf die Summe der bei der Aktivierung und der Copolymerisation eingesetzten Menge an Propylenoxid und das molare Verhältnis von Thiocarbonatgruppen (-S(C=S)-) zu Thiocarbonatgruppen (-S(C=O)-) im Polyetherthiocarbonatpolyol.

Unter Berücksichtigung der relativen Intensitäten wurden die Werte wie folgt berechnet:

$$\text{Polyetherthiocarbonatpolyol (P mol.-\%)} = [((I1/3) / ((I1/3) + (I2/3 + (I3/3))] * 100\%$$

Molares Verhältnis von Thiocarbonatgruppen (-S(C=S)-) zu Thiocarbonatgruppen (-S(C=O)-) im Polyetherthiocarbonatpolyol:

$$e/e' = (I4/2) + (I6)) / I5$$

Der Anteil, der durch den Einbau des Kohlenstoffdisulfids resultierenden Thiocarbonatgruppen (-S(C=S)-) in den Wiederholungseinheiten des Polyetherthiocarbonatpolyol:

$$\text{Thiocarbonatgruppen (-S(C=S)-) mol-\%} = [((I4/2) + (I6)) / ((I4/2) + I5 + I6)] * 100\%$$

Der Anteil, der durch den Einbau des Kohlenstoffdisulfids resultierenden Thiocarbonatgruppen (-S(C=O)-) in den Wiederholungseinheiten des Polyetherthiocarbonatpolyol:

$$\text{Thiocarbonatgruppen (-S(C=O)-) mol-\%} = [(I5 / ((I4/2) + I5 + I6)] * 100\%$$

Das Zahlenmittel $M_n$ und das Gewichtsmittel $M_w$ des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Polyetherthiocarbonatpolyol].

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polythioethercarbonatpolyol (0,1 g) wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

Für die rheologische Bestimmung des Gel-Punktes für das Polyurethanpolymer wurden die Polythioethercarbonatpolyole mit einer äquimolaren Menge an Desmodur N3300 (Hexamethylendiisocyanat-Trimer) und 2000 ppm Dibutylzinnlaurat (2% in Diphenylether) versetzt. Die komplexen Moduli G' (Speichermodul) und G" (Verlustmodul) wurden in einer Oszillationsmessung bei 40°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde definiert als der Zeitpunkt, an dem G' = G" wurde.

Der Anteil an Schwefelatomen (S- Gew.-%) im Polyetherthiocarbonatpolyol wurde mit Hilfe von Elementaranalyse bestimmt. Die Analyse im Gerät "CHN628" der Firma Leco beruht auf einer Verbrennung bei 950 °C (Nachbrennraum 850 °C) im reinen Sauerstoffstrom und einer anschließenden Analyse im Heliumstrom als Trägergas. Die Analyse erfolgt in Anlehnung an die Normen DIN 51732 und DIN EN ISO 16948. Die Bestimmung des Schwefelgehalts erfolgt, nach der Verbrennung der Probe im Sauerstoffstrom und trocknen des Verbrennungsgases mittels Infrarot-Zellen in Anlehnung an die DIN CENTS 15289

Brechungs-index von Polyetherthiocarbonatpolyolen wurde mit Hilfe von Abbe-Refraktometer AR4 der Firma A.KRÜSS Optronic GmbH bestimmt.

IR Spektroskopie: FT-IR Spektren wurden mit Hilfe eines Bruker Alpha-P FT-IR Spektrometer (Bruker Optics), ausgestattet mit Diamantkopf, aufgenommen. Alle Proben wurden in einem Bereich von 4000 - 400 $cm^{-1}$ mit 24 Scans bei einer Auflösung von 4 $cm^{-1}$ aufgenommen. Die Spektren wurden mit Hilfe der Software OPUS 7.0 (Bruker Optics) ausgewertet.

Die folgenden Beispiele 1 bis 4 wurden mit PET-1 als Starter durchgeführt. Die Angaben zum Druck beziehen sich auf den absoluten Druck.

**Beispiel 1: Polymerisation von Propylenoxid und $CS_2$ mit einem unter Argon getrockneten und unter Ar-Atmosphäre aktivierten DMC Katalysatorin einem Semi-Batch Verfahren unter Zugabe von CS2 in Schritt** $\gamma$

[erste Aktivierungsstufe, Schritt ($\alpha$)]

In einem 300 ml Druckreaktor ausgestattet mit Hohlwellenrührer wurde eine Mischung aus DMC-Katalysator (18 mg) und PET-1 (20 g) vorgelegt. Der Reaktor wurde geschlossen und für fünf Minuten wurde der Druck im Reaktor auf 5 mbara reduziert. Anschließend wurde durch Anlegen eines leichten Ar-Stroms und gleichzeitigem Entfernen des Gases mit einer Pumpe der Druck im Reaktor auf 50 mbara geregelt. Der Reaktor wurde auf 130°C aufgeheizt und die Mischung für 30 min bei 130°C unter reduziertem Druck (50 mbara) und leichtem Ar-Strom gerührt (800 U/min).

[zweite Aktivierungsstufe, Schritt ($\beta$)]

Es wurde 2 bara Ar aufgepresst. Es wurden 2 g Propylenoxid mit Hilfe einer HPLC-Pumpe (1,0 mL/min) zu dosiert und die Reaktionsmischung für 20 min gerührt (800 U/min). Anschließend wurden noch zwei weitere mal 2 g Propylenoxid mit Hilfe der HPLC-Pumpe (1,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die

Aktivierung des Katalysators.

[Polymerisationsstufe, Schritt ($\gamma$)]

Nach Abkühlen auf 110°C wurden unter weiterem Rühren weitere 34 g Propylenoxid über eine HPLC-Pumpe (1,0 mL/min) zudosiert. 4 min nach Start der Zugabe von Propylenoxid wurde gleichzeitig 15 g $CS_2$ über eine HPLC-Pumpe (0,5 mL/min) zudosiert. Anschließend wurde die Reaktionsmischung weitere 1 h bei 110°C gerührt. Die Reaktion wurde durch Kühlung des Reaktors mit Eiswasser gestoppt, der Überdruck wurde abgelassen und das resultierende Produkt analysiert.

Die NMR-spektroskopische Untersuchung des Reaktionsgemisches zeigte einen vollständigen Umsatz des Propylenoxids.

Die Selektivität von linearem Polyetherthiocarbonatpolyol zu cyclischem Thiocarbonat betrug ≥ 99 %

Das molare Verhältnis von Thiocarbonatgruppen (-S(C=S)-) zu Thiocarbonatgruppen (-S(C=O)-) im Polyetherthiocarbonatpolyol betrug 3,9.

Der Anteil an Schwefelatomen (- Gew.-%) im Polyetherthiocarbonatpolyol betrug 6,2 - Gew.-%.

Das erhaltene Polyetherthiocarbonatpolyol wies ein Molekulargewicht $M_n$ = 3411 g/mol, $M_w$ = 5798 g/mol und eine Polydispersität von 1,7 auf.

Die OH Zahl des erhaltenen Gemisches war 44,0 $mg_{KOH}$/g.

Der Brechungsindex des erhaltenen Polyetherthiocarbonatpolyols betrug 1,51.

Die Zeit bis zur Erreichung des Gel-Punktes für das Polyurethanpolymer betrug 8,2 min.

**Beispiel 2: Polymerisation von Propylenoxid und $CS_2$ mit einem unter Argon getrockneten und unter Ar-Atmosphäre aktivierten DMC Katalysator in einem Semi-Batch Verfahren**

[erste Aktivierungsstufe, Schritt ($\alpha$)]

In einem 300 ml Druckreaktor ausgestattet mit Hohlwellenrührer wurde eine Mischung aus DMC-Katalysator (18 mg) und PET-1 (20 g) vorgelegt. Der Reaktor wurde geschlossen und für fünf Minuten wurde der Druck im Reaktor auf 5 mbara reduziert. Anschließend wurde durch Anlegen eines leichten Ar-Stroms und gleichzeitigem Entfernen des Gases mit einer Pumpe der Druck im Reaktor auf 50 mbara geregelt. Der Reaktor wurde auf 130°C aufgeheizt und die Mischung für 30 min bei 130°C unter reduziertem Druck (50 mbara) und leichtem Ar-Strom gerührt (800 U/min).

[zweite Aktivierungsstufe, Schritt ($\beta$)]

Es wurde 2 bara Ar aufgepresst. Es wurden 2 g Propylenoxid mit Hilfe einer HPLC-Pumpe (1,0 mL/min) zu dosiert und die Reaktionsmischung für 20 min gerührt (800 U/min). Anschließend wurden noch zwei weitere mal 2 g Propylenoxid mit Hilfe der HPLC-Pumpe (1,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt ($\gamma$)]

Nach Abkühlen auf 110°C wurden unter weiterem Rühren 15 g $CS_2$ über eine HPLC-Pumpe (2,0 mL/min) zudosiert. Nach der Zugabe von $CS_2$ wurden 34 g Propylenoxid über eine HPLC-Pumpe (1 mL/min) zudosiert. Anschließend wurde die Reaktionsmischung weitere 1 h bei 110°C gerührt. Die Reaktion wurde durch Kühlung des Reaktors mit Eiswasser gestoppt, der Überdruck wurde abgelassen und das resultierende Produkt analysiert.

Die NMR-spektroskopische Untersuchung des Reaktionsgemisches zeigte einen vollständigen Umsatz des Propylenoxids.

Die Selektivität von linearem Polyetherthiocarbonatpolyol zu cyclischem Thiocarbonat betrug > 99 %.

Das molare Verhältnis von Thiocarbonatgruppen (-S(C=S)-) zu Thiocarbonatgruppen (-S(C=O)-) im Polyetherthiocarbonatpolyol betrug 8,9.

Der Anteil an Schwefelatomen (- Gew.-%) im Polyetherthiocarbonatpolyol betrug 3,7 - Gew.-%.

Das erhaltene Polyetherthiocarbonatpolyol wies ein Molekulargewicht $M_n$ = 3116 g/mol, $M_w$ = 6232 g/mol und eine Polydispersität von 2,0 auf.

Die OH Zahl des erhaltenen Gemisches war 42,6 $mg_{KOH}$/g.

Der Brechungsindex des erhaltenen Polyetherthiocarbonatpolyols betrug 1,46.

Die Zeit bis zur Erreichung des Gel-Punktes für das Polyurethanpolymer betrug 6,3 min.

**Beispiel 3 (Vergleich): Herstellung eines Polyetherthiocarbonatpolyols durch Semi-Batch Verfahren unter Zugabe von $CS_2$ in Schritt $\alpha$**

[erste Aktivierungsstufe, Schritt ($\alpha$)]

In einem 300 ml Druckreaktor ausgestattet mit einem Gaseintragsrührer wurde eine Mischung aus DMC-Katalysator (18 mg), PET-1 (20 g) und $CS_2$ (15 g) vorgelegt. Der Reaktor wurde geschlossen und für fünf Minuten wurde der Druck im Reaktor auf 5 mbara reduziert. Anschließend wurde durch Anlegen eines leichten Ar-Stroms und gleichzeitigem Entfernen des Gases mit einer Pumpe der Druck im Reaktor auf 50 mbara geregelt. Der Reaktor wurde auf 130°C aufgeheizt und die Mischung für 30 min bei 130°C unter reduziertem Druck (50 mbara) und leichtem Ar-Strom gerührt (800 U/min).

[zweite Aktivierungsstufe, Schritt ($\beta$)]

Es wurde 2 bara Ar aufgepresst. Es wurden 2 g Propylenoxid mit Hilfe einer HPLC-Pumpe (1,0 mL/min) zu dosiert und die Reaktionsmischung für 20 min gerührt (800 U/min). Anschließend wurden noch zwei weitere mal 2 g Propylenoxid mit Hilfe der HPLC-Pumpe (1,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt ($\gamma$)]

Nach Abkühlen auf 110°C wurden unter weiterem Rühren 34 g Propylenoxid über eine HPLC-Pumpe (1,0 mL/min) zudosiert. Anschließend wurde die Reaktionsmischung weitere 1 h bei 110°C gerührt. Die Reaktion wurde durch Kühlung des Reaktors mit Eiswasser gestoppt, der Überdruck wurde abgelassen. Es wurde kein Produkt erhalten

**Beispiel 4 (Vergleich): Herstellung eines Polyetherthiocarbonatpolyols durch Semi-Batch Verfahren unter Zugabe von $CS_2$ in Schritt $\beta$**

[erste Aktivierungsstufe, Schritt ($\alpha$)]

In einem 300 ml Druckreaktor ausgestattet mit Hohlwellenrührer wurde eine Mischung aus DMC-Katalysator (18 mg) und PET-1 (20 g) vorgelegt. Der Reaktor wurde geschlossen und für fünf Minuten wurde der Druck im Reaktor auf 5 mbara reduziert. Anschließend wurde durch Anlegen eines leichten Ar-Stroms und gleichzeitigem Entfernen des Gases mit einer Pumpe der Druck im Reaktor auf 50 mbara geregelt. Der Reaktor wurde auf 130°C aufgeheizt und die Mischung für 30 min bei 130°C unter reduziertem Druck (50 mbara) und leichtem Ar-Strom gerührt (800 U/min).

[zweite Aktivierungsstufe, Schritt ($\beta$)]

Es wurde 2 bara Ar aufgepresst. Es wurden unter weiterem Rühren 15 g $CS_2$ über eine HPLC-Pumpe (2,0 mL/min) zudosiert, wobei ein leichter Temperaturabfall zu beobachten war. Nach Wiedererreichen einer Temperatur von 130°C wurden 2 g Propylenoxid mit Hilfe einer HPLC-Pumpe (1,0 mL/min) zu dosiert und die Reaktionsmischung für 20 min gerührt (800 U/min). Anschließend wurden noch zwei weitere mal 2 g Propylenoxid mit Hilfe der HPLC-Pumpe (1,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt ($\gamma$)]

Nach Abkühlen auf 110°C wurden unter weiterem Rühren 34 g Propylenoxid über eine HPLC-Pumpe (1,0 mL/min) zudosiert. Anschließend wurde die Reaktionsmischung weitere 1 h bei 110°C gerührt. Die Reaktion wurde durch Kühlung des Reaktors mit Eiswasser gestoppt, der Überdruck wurde abgelassen. Es wurde kein Produkt erhalten.

**Tabelle 1:** Übersicht der Resultate der Herstellung von Polyetherthiocarbonatpolyolen unter Variation des Zugabezeitpunktes für Kohlenstoffdisulfid in einem Semi-Batch Verfahren

| Beispiel[a)] | Zugabezeitpunkt für $CS_2$ | n(PO)/ n(CS2) | Selektivität zu PETC[b)] | S( -S(C=S)-) | S(-S(C=O)-) | Anteil an Schwefelatomen | Brechungs-index |
|---|---|---|---|---|---|---|---|
| | [-] | [mol/mol] | [mol-%] | [mol-%] | [mol-%] | [Gew.-%] | [-] |
| **1** | [Schritt γ] | 3,5 | >99% | 79,9 | 20,1 | 6,2 | 1,51 |
| **2** | [Schritt γ] | 3,5 | >99% | 89,9 | 10,1 | 3,7 | 1,46 |
| **3 (Vgl.)** | [Schritt α] | 3,5 | Es wurde kein Produkt erhalten | | | | |
| **4 (Vgl.)** | [Schritt β] | 3,5 | Es wurde kein Produkt erhalten | | | | |

a)Vgl.: Vergleichsbeispiel, PETC: b) lineares Polyetherthiocarbonatpolyol,

Beispiele 1 und 2 und Vergleichsbeispiele 3 und 4 belegen, dass im Falle einer Zugabe von Kohlenstoffdisulfid in der Polymerisationsstufe (Schritt γ) (Beispiel 1-2) das Kohlenstoffdisulfid in das Polymer eingebaut wird, während im Vergleich bei einer Zugabe von Kohlenstoffdisulfid nur während der ersten Aktivierungsstufe (Schritt α) (Vergleichsbeispiel 3) oder der zweiten Aktivierungsstufe (Schritt β) (Vergleichsbeispiel 4) kein Produkt erhalten wird. Ebenfalls erhöht sich der Brechungsindex des Polymers mit erhöhtem Anteil an eingebautem Kohlenstoffdisulfid im Polyetherthiocarbonatpolyol (Beispiele 1-2). Ebenso ist das lineare Polyetherthiocarbonatpolyol in hoher Selektivität zu cyclischem Thiocarbonat erhalten und das erhaltene Polyol weist ein höheres Verhältnis von Thiocarbonatgruppen (-S(C=S)-) gegenüber Thiocarbonatgruppe (-S(C=O)-) auf (Beispiele 1-2).

**Beispiel 5: Variation des Starter-Polyols durch Verwendung von PET-2 anstelle von PET-1 (n(PO)/n(CS2) = 3,7)**

Bei einer Verfahrensführung analog zu Beispiel 1 wurden eingesetzt: Starter PET-2 (20 g); DMC-Katalysator (18 mg); Propylenoxid (2+2+2 g in Schritt (ß) +36 g in Schritt (γ), gesamt 42 g); $CS_2$ (0.5 mL/min = 15 g); Katalysatoraktivierung wie beschrieben; Argon-Strippen (50 mbara); Aktivierungstemperatur = 130 °C; Reaktionstemperatur = 110 °C; Nachreaktionszeit = 1 h. Die Reaktion wurde durch Kühlung des Reaktors mit Eiswasser gestoppt, der Überdruck wurde abgelassen und das resultierende Produkt analysiert.

Die NMR-spektroskopische Untersuchung des Reaktionsgemisches zeigte einen vollständigen Umsatz des Propylenoxids.

Die Selektivität von linearem Polyetherthiocarbonatpolyol zu cyclischem Thiocarbonat betrug ≥ 99 %.

Das molare Verhältnis von Thiocarbonatgruppen (-S(C=S)-) zu Thiocarbonatgruppen (-S(C=O)-) im Polyetherthiocarbonatpolyol betrug 7,3 %.

Der Anteil an Schwefelatomen (- Gew.-%) im Polyetherthiocarbonatpolyol betrug 6,4 - Gew.-%.

Das erhaltene Polyetherthiocarbonatpolyol wies ein Molekulargewicht $M_n$ = 3430 g/mol, $M_w$ = 6517 g/mol und eine Polydispersität von 1,9 auf.

Die OH Zahl des erhaltenen Gemisches war 54,7 $mg_{KOH}$/g.

Der Brechungsindex des erhaltenen Polyetherthiocarbonatpolyols betrug 1,54.

Die Zeit bis zur Erreichung des Gel-Punktes betrug für das Polyurethanpolymer 2,0 min.

**Beispiel 6: Copolymerisation von Styroloxid und $CS_2$ (n(SO)/n(CS2) = 1,8)**

Bei einer Verfahrensführung analog zu Beispiel 1 wurden eingesetzt: Starter PET-1 (20 g); DMC-Katalysator (18 mg, 300 ppm); Styroloxid (2+2+2 g in Schritt (ß) +36 g Schritt in (γ), gesamt 42 g); $CS_2$ (0.5 mL/min = 15 g); Katalysatoraktivierung wie beschrieben; Argon-Strippen (50 mbara); Aktivierungstemperatur = 130 °C; Reaktionstemperatur = 110 °C; Nachreaktionszeit = 1 h. Man erhielt ein Polyetherthiocarbonatpolyol mit einer Viskosität von 9.22 Pa·s.

**Beispiel 7: Polymerisation von Propylenoxid und $CS_2$ mit einem unter Argon getrockneten und unter Ar-Atmosphäre aktivierten DMC Katalysatorin einem Semi-Batch CAOS Verfahren**

[erste Aktivierungsstufe, Schritt (α)]

In einem 970 ml Druckreaktor ausgestattet mit einem Gaseintragsrührer wurde eine Mischung aus DMC-Katalysator (30,0 mg) und Toluol (175 mL) vorgelegt und die Reaktionsmischung für 30 min bei 130°C gerührt (800 U/min).

[zweite Aktivierungsstufe, Schritt (β)]

Es wurde 2 bar Ar aufgepresst. Es wurden 2.5 g Propylenoxid mit Hilfe einer HPLC-Pumpe (3,0 mL/min) zu dosiert und die Reaktionsmischung für 20 min gerührt (800 U/min). Anschließend wurden noch zwei weitere mal 2,5g Propylenoxid mit Hilfe der HPLC-Pumpe (3,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt (γ)]

Die Temperatur wurde auf 110°C nachgeregelt und wurden unter Rühren weitere 77,4 g Propylenoxid über eine HPLC-Pumpe (1,25 mL/min) zudosiert, wobei die Reaktionsmischung weiterhin gerührt wurde (800 U/min). Drei Minuten nach Beginn der Zugabe vom Propylenoxid (3, 0) wurden unter Rühren 4,5 g Dipropylenglycol über eine separate HPLC-Pumpe (0,18 mL/min) zudosiert. Gleichzeitig 15 Minuten nach Beginn der Zugabe vom Propylenoxid (15,0 g) wurden 10,0 g $CS_2$ über eine separate HPLC-Pumpe (0,13 mL/min) zudosiert. Nach Ende der Zugabe von Propylenoxid

wurde die Reaktionsmischung noch weitere 30 min bei 110°C gerührt. Die Reaktion wurde durch Kühlung des Reaktors mit Eiswasser gestoppt, der Überdruck wurde abgelassen und das resultierende Produkt analysiert.

Die NMR-spektroskopische Untersuchung des Reaktionsgemisches zeigte einen vollständigen Umsatz des Propylenoxids.

Die Selektivität von linearem Polyetherthiocarbonatpolyol zu cyclischem Thiocarbonat betrugt $\geq$ 99 %.

Das molare Verhältnis von Thiocarbonatgruppen (-S(C=S)-) zu Thiocarbonatgruppen (-S(C=O)-) im Polyetherthiocarbonatpolyol betrug 13,5.

Der Anteil an Schwefelatomen (- Gew.-%) im Polyetherthiocarbonatpolyol betrug 2,1 - Gew.-%.

Das erhaltene Polyetherthiocarbonatpolyol wies ein Molekulargewicht $M_n$ = 2918 g/mol, $M_w$ = 5798 g/mol und eine Polydispersität von 1,81 auf.

Die OH Zahl des erhaltenen Gemisches war 40.3 $mg_{KOH}$/g.

**Beispiel 8 (Vergleich): Polymerisation von Propylenoxid und $CS_2$ mit einem unter Argon getrockneten und unter Ar-Atmosphäre aktivierten DMC Katalysatorin einem Semi-Batch CAOS Verfahren unter Zugabe von $CS_2$ in Schritt $\alpha$**

[erste Aktivierungsstufe, Schritt ($\alpha$)]

In einem 970 ml Druckreaktor ausgestattet mit einem Gaseintragsrührer wurde eine Mischung aus DMC-Katalysator (30,0 mg), Toluol (175 mL), und $CS_2$ (10,0 g) vorgelegt und die Reaktionsmischung für 30 min bei 130°C gerührt (800 U/min).

[zweite Aktivierungsstufe, Schritt ($\beta$)]

Es wurde 2 bar Ar aufgepresst. Es wurden 2.5 g Propylenoxid mit Hilfe einer HPLC-Pumpe (3,0 mL/min) zu dosiert und die Reaktionsmischung für 20 min gerührt (800 U/min). Anschließend wurden noch zwei weitere mal 2,5g Propylenoxid mit Hilfe der HPLC-Pumpe (3,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt ($\gamma$)]

Die Temperatur wurde auf 110°C nachgeregelt und wurden unter Rühren weitere 77,4 g Propylenoxid über eine HPLC-Pumpe (1,25 mL/min) zudosiert, wobei die Reaktionsmischung weiterhin gerührt wurde (800 U/min). Drei Minuten nach Beginn der Zugabe vom Propylenoxid (3, 0) wurden unter Rühren 4,5 g Dipropylenglycol über eine separate HPLC-Pumpe (0,18 mL/min) zudosiert. Nach Ende der Zugabe von Propylenoxid wurde die Reaktionsmischung noch weitere 30 min bei 110°C gerührt. Die Reaktion wurde durch Kühlung des Reaktors mit Eiswasser gestoppt, der Überdruck wurde abgelassen. Es wurde kein Produkt erhalten.

**Beispiel 9 (Vergleich): Polymerisation von Propylenoxid und $CS_2$ mit einem unter Argon getrockneten und unter Ar-Atmosphäre aktivierten DMC Katalysator in einem Semi-Batch CAOS Verfahren unter Zugabe von $CS_2$ in Schritt $\beta$**

[erste Aktivierungsstufe, Schritt ($\alpha$)]

In einem 970 ml Druckreaktor ausgestattet mit einem Gaseintragsrührer wurde eine Mischung aus DMC-Katalysator (30,0 mg), Toluol (175 mL), und $CS_2$ (10,0 g) vorgelegt und die Reaktionsmischung für 30 min bei 130°C gerührt (800 U/min).

[zweite Aktivierungsstufe, Schritt ($\beta$)]

Es wurde 2 bar Ar aufgepresst. Es wurden unter weiterem Rühren 10,0 g $CS_2$ über eine HPLC-Pumpe (2,0 mL/min) zudosiert, wobei ein leichter Temperaturabfall zu beobachten war. Nach Wiedererreichen einer Temperatur von 130°C wurden 2,5 g Propylenoxid mit Hilfe einer HPLC-Pumpe (1,0 mL/min) zu dosiert und die Reaktionsmischung für 20 min gerührt (800 U/min). Anschließend wurden noch zwei weitere mal 2,5 g Propylenoxid mit Hilfe der HPLC-Pumpe (1,0 ml/min) zudosiert und die Reaktionsmischung für jeweils 20 min gerührt (800 U/min). Das Auftreten einer kurzzeitig erhöhten Wärmeentwicklung im Reaktor während dieser Zeit bestätigte die Aktivierung des Katalysators.

[Polymerisationsstufe, Schritt (γ)]

Die Temperatur wurde auf 110°C nachgeregelt und wurden unter Rühren weitere 77,4 g Propylenoxid über eine HPLC-Pumpe (1,25 mL/min) zudosiert, wobei die Reaktionsmischung weiterhin gerührt wurde (800 U/min). Drei Minuten nach Beginn der Zugabe vom Propylenoxid (3, 0) wurden unter Rühren 4,5 g Dipropylenglycol über eine separate HPLC-Pumpe (0,18 mL/min) zudosiert. Nach Ende der Zugabe von Propylenoxid wurde die Reaktionsmischung noch weitere 30 min bei 110°C gerührt. Die Reaktion wurde durch Kühlung des Reaktors mit Eiswasser gestoppt, der Überdruck wurde abgelassen. Es wurde kein Produkt erhalten.

**Tabelle 2:** Übersicht der Resultate der Herstellung von Polyetherthiocarbonatpolyolen unter Variation des Zugabezeitpunktes für Kohlenstoffdisulfid in einem Semi-Batch CAOS Verfahren

| Beispiel[a)] | Zugabezeitpunkt für $CS_2$ | n(PO)/ n(CS2) | Selektivität zu PETC[b)] | S(-S(C=S)-O) | S(-S(C=O)-) | Anteil an Schwefelatomen | Brechungs-index |
|---|---|---|---|---|---|---|---|
| | [-] | [mol/mol] | [mol-%] | [mol -%] | [mol -%] | [Gew.-%] | [-] |
| **7** | [Schritt $\gamma$] | 11,1 | >99% | 93,1 | 6,9 | 2,1 | 1,47 |
| **8 (Vgl.)** | [Schritt $\alpha$] | 11,1 | Es wurde kein Produkt erhalten | | | | |
| **9 (Vgl.)** | [Schritt $\beta$] | 11,1 | Es wurde kein Produkt erhalten | | | | |

[a)]Vgl.: Vergleichsbeispiel, PETC: [b)] lineares Polyetherthiocarbonatpolyol,

Beispiel 7 und Vergleichsbeispiele 8-9 belegen, dass im Falle einer Zugabe von Kohlenstoffdisulfid in der Polymerisationsstufe (Schritt γ) (Beispiel 7) das Kohlenstoffdisulfid in das Polymer eingebaut wird, während im Vergleich bei einer Zugabe von Kohlenstoffdisulfid nur während der ersten Aktivierungsstufe (Schritt α) (Vergleichsbeispiel 8) oder der zweiten Aktivierungsstufe (Schritt β) (Vergleichsbeispiel 9) kein Produkt erhalten wird. Ebenfalls erhöht sich der Brechungsindex des Polymers mit erhöhtem Anteil an eingebautem Kohlenstoffdisulfid im Polyetherthiocarbonatpolyol (Beispiele 7). Ebenso wird das lineare Polyetherthiocarbonatpolyol in hoher Selektivität zu cyclischem Thiocarbonat erhalten und das erhaltene Polyol weist ein höheres Verhältnis von Thiocarbonatgruppe (-S(C=S)-) gegenüber Thiocarbonatgruppen (-S(C=O)-) auf (Beispiele 7).

**Patentansprüche**

1. Verfahren zur Herstellung von Polyetherthiocarbonatpolyolen, umfassend den Schritt der Reaktion von Kohlenstoffdisulfid und mindestens eines Alkylenoxids in Gegenwart eines Doppelmetallcyanid-Katalysators und mindestens einer H-funktionellen Starterverbindung,
**dadurch gekennzeichnet, dass**
der Doppelmetallcyanid-Katalysator vor dem ersten Kontakt mit Kohlenstoffdisulfid zuvor mit mindestens einem Alkylenoxid kontaktiert wurde.

2. Verfahren gemäß Anspruch 1, wobei das mindestens eine Alkylenoxid ausgewählt wird aus der Gruppe bestehend aus Ethylenoxid, Propylenoxid und Styroloxid.

3. Verfahren gemäß Anspruch 1 oder 2, wobei die mindestens eine H-funktionelle Starterverbindung ausgewählt ist aus der Gruppe der Polyetherpolyole, Polyesterpolyole, Polyetheresterpolyole, Polyethercarbonatpolyole, Polycarbonatpolyole und Polyacrylatpolyole.

4. Verfahren gemäß einem der Ansprüche 1 bis 3, wobei das molare Verhältnis des mindestens einem eingesetztem Alkylenoxid zu dem eingesetztem Kohlenstoffdisulfid in einem Bereich von ≥1:1 bis ≤ 100:1, bevorzugt von ≥1:1 bis ≤ 50:1 und besonders bevorzugt von ≥1:1 bis ≤ 20:1 liegt.

5. Verfahren gemäß einem der Ansprüche 1 bis 4, wobei

(α) in einem Reaktor der Doppelmetallcyanid-Katalysator sowie die mindestens eine H-funktionelle Starterverbindungen vorgelegt werden und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird;
(β) zu dem Gemisch aus Schritt (α) eine Teilmenge (bezogen auf die Gesamtmenge der in den Schritten (β) und (γ) eingesetzten Menge an Alkylenoxiden) des mindestens einem Alkylenoxid bei Temperaturen von 50 bis 200 °C zugegeben wird;
(γ) Kohlenstoffdisulfid und mindestens ein Alkylenoxid zu der aus Schritt (β) resultierenden Mischung hinzugefügt werden.

6. Verfahren gemäß Anspruch 5, wobei in Schritt (γ) Kohlenstoffdisulfid und mindestens eine Alkylenoxid zu der aus Schritt (β) resultierenden Mischung kontinuierlich zudosiert werden.

7. Verfahren gemäß Anspruch 5 oder 6, wobei Schritt (γ) bei 50 bis 150 °C, bevorzugt bei 60 bis 145 °C, besonders bevorzugt bei 70 bis 140°C und ganz besonders bevorzugt bei 90 bis 130°C durchgeführt wird.

8. Verfahren gemäß einem der Ansprüche 1 bis 4, wobei im Schritt

(α’) in einem Reaktor der Doppelmetallcyanid-Katalysator sowie die mindestens H-funktionelle Starterverbindung und/oder ein Suspensionsmittel, das keine H-funktionellen Gruppen enthält, vorgelegt werden und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird;
(β’) zu dem Gemisch aus Schritt (α’) eine Teilmenge (bezogen auf die Gesamtmenge der in den Schritten (β’) und (γ’) eingesetzten Menge an Alkylenoxiden) des mindestens einem Alkylenoxids bei Temperaturen von 50 bis 200 °C zugegeben wird und danach die Zugabe des mindestens einem Alkylenoxids unterbrochen wird;
(γ’) mindestens ein Alkylenoxid, Kohlenstoffdisulfid und mindestens eine H-funktionelle Starterverbindung sowie

gegebenenfalls Doppelmetallcyanidkatalysator während der Reaktion kontinuierlich in den Reaktor zudosiert wird.

**9.** Verfahren gemäß Anspruch 8, wobei

(α') in einem Reaktor der Doppelmetallcyanid-Katalysator ein Suspensionsmittel, das keine H-funktionellen Gruppen enthält, vorgelegt wird und durch den Reaktor bei einer Temperatur von 50 bis 200 °C ein Inertgas geleitet wird und gleichzeitig durch Entfernen des Inertgases ein reduzierter Druck (absolut) von 10 mbara bis 800 mbara im Reaktor eingestellt wird.

**10.** Verfahren gemäß Anspruch 8 oder 9, wobei im Schritt (γ') die Dosierung der mindestens einen H-funktionellen Starterverbindung zeitlich vor der Zugabe des mindestens einen Alkylenoxids beendet wird.

**11.** Verfahren nach einem der Ansprüche 8 bis 10, wobei Schritt (γ') bei 50 bis 150 °C, bevorzugt bei 60 bis 145 °C, besonders bevorzugt bei 70 bis 140°C und ganz besonders bevorzugt bei 90 bis 130°C durchgeführt wird.

**12.** Polyetherthiocarbonatpolyol, erhältlich durch ein Verfahren gemäß einem der Ansprüche 1 bis 11, **dadurch gekennzeichnet, dass** der Gesamtgehalt der funktionellen Gruppe:

-S-C(=O)-

im Polymer ≤ 21 mol-% beträgt.

**13.** Polyetherthiocarbonatpolyol gemäß Anspruch 12 mit einem Brechungsindex $n_D$ (20 °C) von ≥ 1.45.

**14.** Polyurethanpolymer, erhältlich aus der Reaktion einer Polyolkomponente umfassend ein Polyetherthiocarbonatpolyols gemäß Anspruch 12 oder 13 mit mindestens einer Polyisocyanatkomponente.

**15.** Polyurethanpolymer gemäß Anspruch 14, wobei das Polyurethanpolymer ein Polyurethanschaumstoff ist.

Europäisches Patentamt
European Patent Office
Office européen des brevets

# EUROPÄISCHER RECHERCHENBERICHT

Nummer der Anmeldung
EP 16 20 5145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 703 426 A1 (BAYER MATERIALSCIENCE AG [DE]) 5. März 2014 (2014-03-05) * Absatz [0001] - Absatz [0075]; Ansprüche 1-15; Beispiele * ----- | 1-15 | INV. C08G65/26 C08G18/00 C08G64/34 |
| Y | EP 3 023 447 A1 (COVESTRO DEUTSCHLAND AG [DE]) 25. Mai 2016 (2016-05-25) * Absatz [0001] - Absatz [0110]; Ansprüche 1-15; Beispiele * ----- | 1-15 | |
| Y | US 2003/100623 A1 (KAKU MOTONAO [JP] ET AL) 29. Mai 2003 (2003-05-29) * Absatz [0001] - Absatz [0601]; Ansprüche 1-35; Beispiele * ----- | 1-15 | |
| Y | XING-HONG ZHANG ET AL: "Atom-Exchange Coordination Polymerization of Carbon Disulfide and Propylene Oxide by a Highly Effective Double-Metal Cyanide Complex", MACROMOLECULES, Bd. 41, Nr. 5, 1. März 2008 (2008-03-01), Seiten 1587-1590, XP055357268, US ISSN: 0024-9297, DOI: 10.1021/ma702290g * Seite 1587 - Seite 1590 * ----- | 1-15 | RECHERCHIERTE SACHGEBIETE (IPC): C08G |

1

Der vorliegende Recherchenbericht wurde für alle Patentansprüche erstellt

| Recherchenort | Abschlußdatum der Recherche | Prüfer |
|---|---|---|
| Den Haag | 3. April 2017 | Kiebooms, Rafaël |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 20 5145

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2017

| Im Recherchenbericht angeführtes Patentdokument | Datum der Veröffentlichung | Mitglied(er) der Patentfamilie | Datum der Veröffentlichung |
|---|---|---|---|
| EP 2703426 A1 | 05-03-2014 | CA 2882915 A1 | 06-03-2014 |
| | | CN 104755531 A | 01-07-2015 |
| | | EP 2703426 A1 | 05-03-2014 |
| | | EP 2888309 A1 | 01-07-2015 |
| | | ES 2602908 T3 | 22-02-2017 |
| | | JP 2015526576 A | 10-09-2015 |
| | | KR 20150052018 A | 13-05-2015 |
| | | PL 2888309 T3 | 31-01-2017 |
| | | RU 2015110827 A | 20-10-2016 |
| | | SG 11201500913Q A | 29-04-2015 |
| | | US 2015259475 A1 | 17-09-2015 |
| | | WO 2014033071 A1 | 06-03-2014 |
| EP 3023447 A1 | 25-05-2016 | EP 3023447 A1 | 25-05-2016 |
| | | WO 2016079065 A1 | 26-05-2016 |
| US 2003100623 A1 | 29-05-2003 | JP 3943493 B2 | 11-07-2007 |
| | | US 2003100623 A1 | 29-05-2003 |
| | | WO 0226864 A1 | 04-04-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2003029325 A1
- EP 1359177 A
- US 7304172 B2
- US 20120165549 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- DE 1694142 A
- DE 1694215 A
- DE 1720768 A
- EP 0007502 A
- EP 0000389 A
- EP 0176013 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **D. J. DARENSBOURG ; S. J. WILSON ; A. D. YEUNG.** *Macromolecules,* 2013, vol. 46, 8102-8110
- **W. CLEGG ; R. W. HARRINGTON ; M. NORTH ; P. VILLUENDAS.** *J. Org. Chem.,* 2010, vol. 75, 6201-6207
- **VON GUO-RONG QI et al.** Atom-Exchange Coordination Polymerization of Carbon Disulfide and Propylene Oxide by a Highly Effective Double-Metal Cyanide Complex. *Macromolecules,* 2008, vol. 41, 1587-1590
- **M. H. CHISHOLM et al.** *Macromolecules,* 2002, vol. 35, 6494
- **S. D. ALLEN.** *J. Am. Chem. Soc.,* 2002, vol. 124, 14284
- *Chemical Communications,* 2011, vol. 47, 141-163
- **VON W. SIEFKEN.** *Justus Liebigs Annalen der Chemie,* vol. 562, 75-136
- Polyurethane, herausgegeben von Vieweg und Höchtlein. Kunststoff-Handbuch. Carl Hanser Verlag, 1966, vol. VII
- Neuauflage dieses Buches. Carl Hanser Verlag, 1993
- Kunststoff-Handbuch. Carl-Hanser-Verlag, 1993, vol. VII, 104-127